# EUROPÄISCHE PATENTANMELDUNG

(11) **EP 2 323 086 A1**
(43) Veröffentlichungstag der Anmeldung: **18.05.2011**
(21) Anmeldenummer: 09012810.9
(22) Anmeldetag: 09.10.2009
(51) Int. Cl.: G06Q 10/00, B42D 7/00, B65B 27/08

(54) **Verfahren und Vorrichtung zum Herstellen und Verladen von Druckproduktgebinden**

(71) Anmelder: Müller Martini Holding AG, 6052 Hergiswil (CH)
(72) Erfinder: Kramer, Michael, 5000 Aarau (CH); Künzli, Thomas, 4053 Basel (CH); Rothenbühler, Hans, 5603 Staufen (CH)
(74) Vertreter: Seranski, Klaus

(57) **Zusammenfassung**

Die Erfindung betrifft ein Verfahren und eine Vorrichtung zum Herstellen und Verladen von zu einer einem Transportmittel (11, 11') zugeordneten Ladung (16) gehörenden und jeweils entsprechend vorgegebenen Verbundaufträgen (20; 30; 23, 33; 26; 36) aus einer vorgegebenen Anzahl vorzugsweise gleichartiger Druckprodukte bestehenden Druckproduktgebinden (18, 19), bei dem auf mindestens zwei unabhängig voneinander betreibbaren Produktionslinien (2, 3) entsprechend den Verbundaufträgen (20; 30; 23, 33; 26; 36) hergestellte Druckproduktgebinde der Ladung (16) zu einer Verladestelle (11) gefördert und dort verladen werden, wobei die Produktionslinien (2, 3) automatisch zu der den Verbundaufträgen (20; 30; 23, 33; 26; 36) entsprechenden Herstellung der Druckproduktgebinde (18, 19) in Abhängigkeit von die einzelnen Verbundaufträge (20; 30; 23, 33; 26; 36) der Ladung (16) darstellenden Ladungsdaten angesteuert werden.

## Beschreibung

Die Erfindung betrifft ein Verfahren und eine Vorrichtung zum Herstellen und Verladen von mindestens zu einer einem Transportmittel zugeordneten Ladung gehörenden und jeweils entsprechend vorgegebenen Verbundaufträgen aus einer vorgegebenen Anzahl vorzugsweise gleichartiger Druckprodukte bestehenden Druckproduktgebinden, bei dem auf mindestens zwei unabhängig voneinander betreibbaren Produktionslinien Druckproduktgebinde der mindestens einen Ladung hergestellt und zu einer der mindestens einen Ladung zugeordneten Verladestelle gefördert und dort verladen werden.

In modernen Druckzentren werden eine Vielzahl unterschiedlicher Arten von Druckprodukten hergestellt. Druckproduktarten sind beispielsweise Zeitungen, Zeitschriften, Broschüren, Kataloge, Bücher und dergleichen. Von einer bestimmten Druckprodukteart werden verschiedene Publikationen hergestellt, wobei teilweise von einer Publikation verschiedene Ausgaben, auch Editionen genannt, produziert werden. Beispielsweise ist eine Tageszeitung XY eine Publikation, welche sehr oft in sich teilweise voneinander unterscheidenden Editionen herausgegeben wird. Damit können beispielsweise unterschiedliche regionale Interessen berücksichtigt werden. Oder ein für mehrere Länder bestimmter Möbelkatalog stellt eine Publikation dar, die in länderspezifischen Ausgaben bzw. Editionen hergestellt wird. Die gleich- oder verschiedenartigen Druckprodukte müssen entsprechend den Distributionsvorgaben zu eine vorgegebene Anzahl Druckprodukte aufweisenden Druckproduktgebinden zusammengefasst, in ein Transportmittel verladen und mit diesem zum Bestimmungsort transportiert werden. Es ist auch denkbar, dass die zu einer Ladung gehörenden Druckproduktgebinde vor dem Verladen in ein Transportmittel zwischengelagert werden.

Die Druckproduktgebinde, beispielsweise Pakete, Rollwagen, Körbe, Paletten, Boxen, Stangen oder sonst irgendwelche geeignete Behälter, werden auf Transportmittel wie z.B, Lieferwagen, LKWs oder Bahnwagen verladen und zu den Bestimmungsorten gebracht. Die Ladung eines Transportmittels besteht üblicherweise aus einer Vielzahl von Druckproduktgebinden, von denen jedes nur eine Publikation oder Edition einer Druckprodukteart enthält. Die Ladung selbst kann allerdings eine Vielzahl unterschiedlicher Druckproduktearten, Publikationen und Editionen enthalten. Die zu einer Ladung gehörenden Druckproduktgebinde derselben Druckprodukteart, Publikation oder Edition werden durch einen Auftrag beschrieben, der sowohl die Anzahl als auch die Art der Druckprodukte angibt. Die Aufträge einer Ladung bilden einen Verbund und werden daher Verbundaufträge genannt. Die Druckproduktgebinde werden in den Druckzentren auf zumindest zwei unabhängig voneinander betreibbaren Produktionslinien hergestellt, wobei jede Produktionslinie zum Herstellen von Druckproduktgebinden aus unterschiedlichen Druckproduktearten oder unterschiedlichen Publikationen bzw. Editionen betreibbar sein kann.

Zur Steuerung der Herstellung von Druckproduktgebinden werden Verbundaufträge, die einzelnen Ladungen zugeordnet sind, auf die verfügbaren Produktionslinien verteilt. Dann wird von einem in dem zur Verteilung der Druckproduktgebinde auf die einzelnen Transportmittel verwendeten Versandraum tätigen Disponenten die zeitliche Abfolge der Herstellung der einzelnen Druckproduktgebinde so festgelegt, dass die den an den Verladestellen angeordneten Transportmitteln zugeordneten Druckproduktgebinde einer Ladung zeitlich nacheinander dort eintreffen und so in das Transportmittel verladen werden können.

Es hat sich gezeigt, dass dieses bekannte Verfahren oft zu einer nur mangelhaften Auslastung der Produktionslinien und bisweilen zu einem Stau von Druckproduktgebinden vor einzeinen Verladestellen führen können. Zudem ist ein nicht unerheblicher Koordinationsaufwand durch einen Disponenten zu tätigen.

Angesichts dieser Probleme im Stand der Technik liegt der Erfindung die Aufgabe zugrunde, Verfahren zum Herstellen und Verladen von Druckproduktgebinden anzugeben, mit denen unter optimaler Ausnutzung der Produktionskapazitäten eine zuverlässige und geordnete Verladung der Druckproduktgebinde möglich ist, und eine zur Ausführung entsprechender Verfahren betreibbare Vorrichtung bereitzustellen.

In verfahrensmäßiger Hinsicht wird diese Aufgabe im Rahmen der Erfindung durch eine Weiterbildung der bekannten Verfahren gelöst, die im wesentlichen dadurch gekennzeichnet ist, dass die Produktionslinien zur Herstellung der Druckproduktgebinde in Abhängigkeit von die einzelnen Verbundaufträge der mindestens einen Ladung darstellenden Ladungsdaten automatisch angesteuert werden, wobei vorzugsweise die zeitliche Abfolge der den Verbundaufträgen entsprechenden Herstellung der Druckproduktgebinde in Abhängigkeit von den Ladungsdaten bestimmt wird.

Dabei geht die Erfindung auf die Erkenntnis zurück, dass die zur Produktion und Verladung der Druckproduktgebinde ohnehin benötigten Ladungsdaten auch zur reihenfolgerichtigen Ansteuerung der Produktionslinien bzw. zur Bestimmung der zeitlichen Abfolge der Herstellung der einzelnen Druckproduktgebinde von Verbundaufträgen einer Ladung auf den einzelnen Produktionslinien verwendet werden können.

Sofern in einer entsprechenden Steuervorrichtung auch noch die Produktionseigenschaften der Produktionslinien darstellende Daten verfügbar sind, kann durch eine automatische Ansteuerung der Produktionslinien auf Grundlage der Ladungsdaten und ggf. dieser zusätzlich die Produktionslinien charakterisierenden Daten automatisch eine Produktionsreihenfolge für die den einzelnen Ladungen zugeordneten Druckproduktgebinde erzeugt werden, mit der einerseits eine gute Ausnutzung der Produktionskapazitäten der einzelnen Produktionslinien sichergestellt und andererseits die gleichzeitige Förderung von mehreren zu einer Ladung gehörenden Druckproduktgebinden zu einer Verladestelle wirksam vermieden werden kann. Demnach wird die ansonsten dem Disponenten in dem Versandraum zugewiesene Aufgabe der Festlegung der zeitlichen Abfolge der Herstellung einzelner Druckproduktgebinde nunmehr durch eine zentrale, die Produktionslinien übergreifende Steuervorrichtung gelöst, wodurch eine versandraumübergreifende Koordination und Synchronisation der Produktion und Verladung möglich ist. Dazu ist es lediglich erforderlich, dass die Ladungsdaten in geeigneten Datenformaten einer zentralen Steuervorrichtung zur Verfügung gestellt werden. Aus diesen Ladungsdaten werden die verschiedenen Druckproduktearten bzw. die verschiedenen Publikationen oder Editionen einer Ladung extrahiert und pro Druckprodukteart bzw. pro Publikation oder pro Edition wird vorzugsweise ein Verbundauftrag gebildet, entsprechend dem Druckproduktgebinde herzustellen sind. Die Zuordnung der Verbundaufträge an eine Verladestelle erfolgt produktionstinienübergreifend, so dass alle entsprechend den Verbundaufträgen hergestellten Druckproduktgebinde einer Ladung bei Ausführung erfindungsgemäßer Verfahren derselben Verladestelle zugewiesen werden.

Bei einer anderen Ausführungsform der Erfindung ist es auch möglich, die Verladestelle noch während der Produktion der Verbundaufträge bzw. während der Produktion der zu der Ladung gehörenden Druckproduktgebinde zu ändern.

Im Rahmen der Erfindung ist an die Ausführung von Verfahren gedacht, bei denen die zeitliche Abfolge der Herstellung der den einzelnen Verbundaufträgen entsprechenden Druckproduktgebinde vorgegeben ist. Eine solche zeitliche Abfolge kann einer zur Ausführung erfindungsgemäßer Verfahren einsetzbaren Steuervorrichtung bspw, durch den Import von Daten über eine geeignete Schnittstelle aufgegeben werden. Die entsprechenden Daten können eine Reihenfolge auf den Produktionslinien herstellbarer Druckproduktarten enthalten. Dann werden die den einzelnen Verbundaufträgen entsprechenden Druckproduktgebinde in Übereinstimmung mit dieser vorgegebenen Reihenfolge hergestellt. Die Reihenfolgedaten können im Besonderen einzelne Druckprodukte als Referenzprodukte ausweisende Daten enthalten. In diesem Fall kann bei Ausführung erfindungsgemäßer Verfahren von den Druckprodukten einer Ladung ein Referenzprodukt bestimmt und die Druckproduktgebinde des dem Referenzprodukt entsprechenden Verbundauftrags zuerst hergestellt und verladen werden.

Wie vorstehend bereits angesprochen, ist es im Rahmen der Erfindung besonders zweckmäßig, wenn die zeitliche Abfolge der den Verbundaufträgen entsprechenden Herstellung der Druckproduktgebinde in Abhängigkeit vom Betriebszustand der Produktionslinien gesteuert wird, um so eine optimale Ausnutzung der Produktionskapazitäten der einzelnen Produktionslinien zu erhalten. Bei dieser Ausführungsform der Erfindung kann die gleichzeitige Anlieferung unterschiedlicher Druckproduktgebinde der verschiedenen Verbundaufträge einer Ladung an eine Verladestelle wirkungsvoll vermieden werden, wenn bei Erreichen eines vorgegebenen Herstellungszustands eines einem vorhergehenden Verbundauftrag entsprechenden Druckproduktgebindes derselben Ladung ein Freigabesignal erzeugt wird, welches die Erzeugung eines Produktionssignals bewirkt und wobei das Produktionssignal bei einer Produktionslinie die Herstellung eines weiteren Druckproduktgebindes der Ladung auslöst. Dabei kann das Produktionssignal ein Datentelegramm sein, welches einen Produktionslinienzustand darstellt.

Bei dieser Ausführungsform der Erfindung werden demnach Freigabezignale von den einzelnen die Verbundaufträge abarbeitenden Produktionslinien erzeugt und erst nach Erzeugung eines entsprechenden Freigabesignals die Herstellung der dem nächsten Verbundauftrag der Ladung entsprechenden Druckproduktgebinde durch Erzeugung eines entsprechenden Produktionssignals und Anlegen dieses Produktionssignals an eine entsprechende Produktionslinie eingeleitet. Dabei kann die gleichzeitige Beförderung einzelner Druckproduktgebinde an eine Verladestelle besonders wirkungsvoll vermieden werden, indem das Freigabesignal erst dann erzeugt wird, wenn die Herstellung des dem Verbundauftrag entsprechenden Druckproduktgebindes abgeschlossen ist. Eine besonders gute Auslastung der Produktionskapazitäten der Produktionslinien kann allerdings erreicht werden, wenn das Freigabesignal bereits dann erzeugt wird, wenn ein vorgegebener Anteil eines Druckproduktgebindes hergestellt ist. In diesem Fall darf es zu einer zeitlich überlappenden Herstellung der den einzelnen Verbundaufträgen entsprechenden Druckproduktgebinde kommen.

Nach Erzeugung eines Freigabesignals ist bei der gerade beschriebenen Ausführungsform der Erfindung die Herstellung von einem Verbundauftrag derselben Ladung entsprechenden Druckproduktgebinden durch Erzeugen eines entsprechenden Produktionssignals und Anlegen dieses Produktionssignals an eine Produktionslinie einzuleiten. Falls zumindest zwei Produktionslinien zur Herstellung von einem Verbundauftrag der Ladung entsprechenden Druckproduktgebinden verfügbar sind, ist es zweckmäßig, dass ein Bereitschaftssignal erzeugt wird, sobald eine Produktionslinie einen zur Herstellung von Druckproduktgebinden geeigneten Betriebszustand erreicht. Das die Verfügbarkeit einer Produktionslinie darstellende Bereitschaftssignal wird zusätzlich zu den Freigabesignalen erzeugt, sobald die entsprechende Produktionslinie den Betriebszustand "Betriebsbereit" aufweist.

Bei der zuletzt beschriebenen Ausführungsform der Erfindung kann ansprechend auf das Freigabesignal ein Produktionssignal für eine zum Herstellen von Druckproduktgebinden der Ladung betreibbare Produktionslinie erzeugt werden, wenn für diese Produktionslinie ein Bereitschaftssignal vorliegt und ein damit herstellbares Druckproduktgebinde gemäß während der Herstellung der Druckproduktgebinde entsprechend dem Herstellungszustand aktualisierten Ladungsdaten noch für die Ladung benötigt wird. Wenn ein Produktionssignal für einen Verbundauftrag erst nach Erzeugen eines Freigabesignals für einen vorhergehenden Verbundauftrag derselben Ladung erzeugt wird, kann zuverlässig die gleichzeitige Anlieferung von zwei oder mehr Druckproduktgebinden von verschiedenen Verbundaufträgen derselben Ladung an die entsprechende Verladestelle verhindert werden, auch wenn die Herstellungsreihenfolge der einzelnen Verbundaufträge der Ladung nicht vorab festgelegt, sondern in Abhängigkeit von der Verfügbarkeit der Produktionslinien bei Eingang der Freigabesignale bestimmt wird.

Wie der vorstehenden Erläuterung dieser Ausführungsform der Erfindung zu entnehmen ist, werden die die Verbundaufträge der Ladung darstellenden Ladungsdaten während der Herstellung der den Verbundaufträgen entsprechenden Druckproduktgebinde fortlaufend aktualisiert. Alternativ oder zusätzlich können entsprechende Verbundaufträge auch gelöscht oder aus dem Verbund bzw aus der von der Steuervorrichtung kontrollierten Abfolge herausgelöst werden.

Im Hinblick auf die angestrebte optimale Ausnutzung der Produktionskapazitäten der Produktionslinien unter gleichzeitiger Vermeidung einer möglichen Überbelastung einzelner Verladestellen und einer möglichst gleichmässigen Verteilung der Verbundaufträge auf die Produktionslinien ist es besonders bevorzugt, wenn das Produktionssignal ansprechend auf ein Freigabesignal für diejenige unter den verfügbaren und zur Produktion noch fehlenden Druckproduktgebinden einsetzbaren Produktionslinien erzeugt wird, für die bei Erzeugung des Freigabesignals das Bereitschaftssignal für den längsten Zeitraum vorliegt. Auf diese Weise wird vermieden, dass einzelne Produktionslinien überhaupt nicht mit der Produktion von zu einzelnen Verbundaufträgen gehörenden Druckproduktgebinden "beauftragt" werden, um so eine gleichmäßige Auslastung der einzelnen Produktionslinien zu erreichen.

Erfindungsgemäße Verfahren sind schon dann mit Vorteil einsetzbar, wenn mit zwei oder mehreren Produktionslinien Druckproduktgebinde von Verbundaufträgen für nur eine Ladung zeitlich synchronisiert hergestellt werden sollen. Mit besonderem Vorteil ist die Erfindung allerdings einsetzbar, wenn den Verbundaufträgen entsprechende Druckproduktgebinde für zumindest zwei Ladungen gleichzeitig hergestellt und an den diesen Ladungen zugeordneten Verladestellen verladen werden, wobei die den Ladungen zugeordneten Verladestellen auch während der Herstellung der entsprechenden Druckproduktgebinde noch verändert werden können. In diesem Fall liegen zwei, drei oder mehr während der Produktion vorzugsweise fortlaufend aktualisierte Ladungsdatensätre vor, anhand derer die zeitliche Abfolge der Herstellung von einzelnen, ggf. unterschiedlichen Ladungen zugeordneten, Verbundaufträgen entsprechend der Druckproduktgebinde gesteuert wird. Auch hier kann neben der eingangs beschriebenen statischen Steuerung auf Grundlage einer vorgegebenen zeitlichen Abfolge eine dynamische Ansteuerung der Produktionslinie in Abhängigkeit von den einzelnen Ladungen zugeordneten Freigabesignalen und von den einzelnen Produktionslinien zugeordneten Bereitschaftssignalen verwirklicht werden.

Im Hinblick auf die Überwachung erfindungsgemäßer Verfahren hat es sich als günstig erwiesen, wenn eine den Herstellungs- und/oder Verladezustand der den Verbundaufträgen mindestens einer Ladung entsprechenden Druckproduktgebinde darstellende Sichtdarstellung erzeugt wird. Diese Sichtdarstellung kann bspw. auf einem einer zur Ausführung der erfindungsgemäßen Steuerung verwendeten Datenverarbeitungsanlage zugeordneten Monitor erfolgen. Zweckmäßig ist es dabei, wenn jeder einzelnen Produktionslinie ein eigener Monitor zur Überwachung der Herstellung von Druckprodukten zugeordnet ist.

Wie der vorstehenden Erläuterung erfindungsgemäßer Verfahren zu entnehmen ist, ist eine Vorrichtung zur Durchführung derartiger Verfahren mit mindestens zwei unabhängig voneinander zum Herstellen von aus Druckprodukten bestehenden Druckproduktgebinden betreibbaren Produktionslinien und einer zum Ansteuern der Produktionslinien betreibbaren Steuervorrichtung im wesentlichen dadurch gekennzeichnet, dass die Steuervorrichtung zur automatischen Bestimmung der zeitlichen Abfolge der Herstellung von entsprechend vorgegebenen Druckproduktgebinden einer zu einem einer Verladestelle zugeordneten Transportmittel gehörenden Ladung in Abhängigkeit von die einzelnen Verbundaufträge der Ladung darstellenden Ladungsdaten betreibbar ist. Dabei kann die erfindungsgemäße Vorrichtung auch zur gleichzeitigen Produktion von Verbundaufträgen für mindestens zwei Ladungen eingesetzt werden, wenn entsprechende Ladungsdaten als Grundlage für die Ansteuerung der Produktionslinien verfügbar sind.

Die Produktionslinien erfindungsgemäßer Vorrichtungen können zum Herstellen von aus mindestens zwei voneinander unterscheidbaren Druckprodukten bestehenden Druckproduktgebinden betreibbar sein. Die zeitliche Abfolge einer erfindungsgemäßen Vorrichtung kann entsprechend einer insbesondere über eine Schnittstelle der Steuervorrichtung übermittelten und von der Steuervorrichtung vorgegebenen Abfolge bestimmbar sein. Zusätzlich oder alternativ ist an den Einsatz erfindungsgemäßer Vorrichtungen gedacht, bei denen die zeitliche Abfolge in Abhängigkeit von die Verfügbarkeit der Produktionslinien darstellenden Bereitschaftssignalen und den Herstellungszustand von den Verbundaufträgen der Ladung entsprechenden Druckproduktgebinden darstellenden Freigabesignalen bestimmbar ist. Dabei können die Produktionslinien zur gleichzeitigen Herstellung von Druckproduktgebinden für zumindest zwei Ladungen ansteuerbar sein.

Nachstehend wird die Erfindung unter Bezugnahme auf die Zeichnung, auf die hinsichtlich aller erfindungswesentlichen und in der Beschreibung nicht näher herausgestellten Einzelheiten ausdrücklich verwiesen wird, erläutert. In der Zeichnung zeigt:
- Figur 1: eine schematische Darstellung einer Vorrichtung nach dem Stand der Technik,
- Figur 2: eine schematische Darstellung einer erfindungsgemässen Vor- richtung,
- Figur 3: ein die Ausführung erfindungsgemäßer Verfahren gemäss einer ersten Ausführungsform der Erfindung darstellendes Diagramm und
- Figur 4: ein die Ausführung erfindungsgemässer Verfahren gemäß einer zweiten Ausführungsform der Erfindung darstellendes Diagramm.

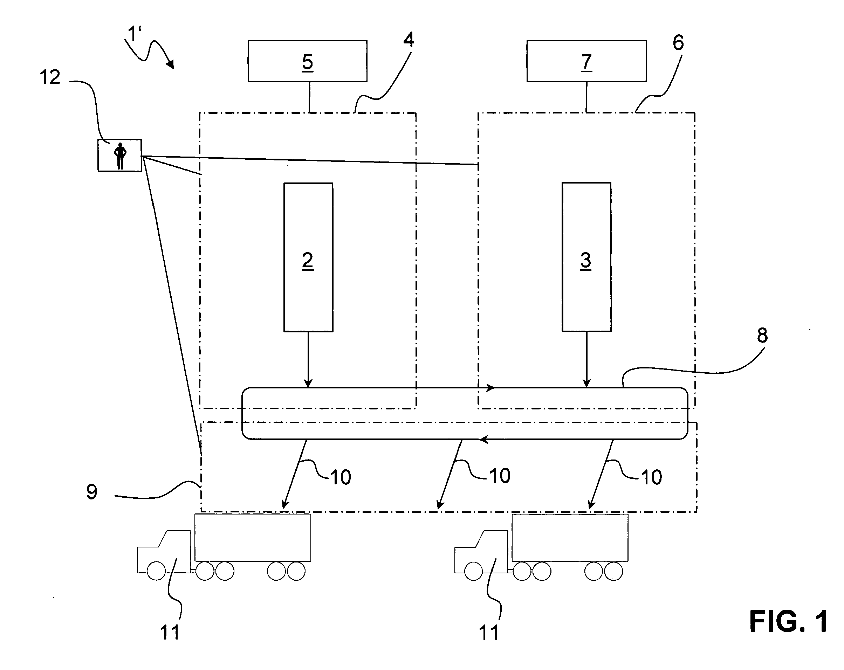

Figur 1 zeigt einen Versandraum 1' mit einer Vorrichtung nach dem Stand der Technik, mit der nicht dargestellte Druckprodukte mit zwei Produktionslinien 2, 3 hergestellt werden können. Die Produktionslinie 2 ist zum Herstellen eines ersten Druckprodukts, die Produktionslinie 3 zum Herstellen eines zweiten betreibbar, wobei jede der Produktionslinien 2, 3 auch noch zum Herstellen anderer Druckprodukte betreibbar sein kann. Es sind auch mehr als zwei Produktionslinien 2, 3 denkbar. Die Produktionslinie 2 ist einem ersten Produktionsbereich 4 zugeordnet, der von einer Steuervorrichtung 5 überwacht und angesteuert wird. Die Produktionslinie 3 ist in einem zweiten Produktionsbereich 6, der von einer Steuervorrichtung 7 kontrolliert wird, angeordnet. Die von den Produktionslinien 2, 3 hergestellten Druckprodukte, beispielsweise Zeitungen, werden in Gruppen zusammengefasst und als Pakete einer Fördereinrichtung 8 zugeführt, Neben Paketen sind auch weitere Druckproduktgebinde zur einfacheren Handhabung und zum Schutz der Druckprodukte wie Rollwagen, Körbe, Paletten, Boxen, Stangen oder sonst irgendwelche geeignete Behälter bekannt. Die Fördereinrichtung 8 transportiert die einzelnen vorzugsweise gleichartige Druckprodukte enthaltenden Druckproduktgebinde zu Verladestellen 10, an denen die Druckprodukte in Transportmittel 11 verladen werden. Üblichweise werden als Transportmittel 11 Lieferwagen, LKWs oder Eisenbahnwagen eingesetzt. Damit es in einem die Fördereinrichtung 8 und die Verladestellen 10 beinhaltendem Verladebereich 9 nicht zu einem Stau von Druckproduktgebinden kommt, versucht ein Disponent 12 die zeitliche Abfolge der auf den Produktionslinien 2, 3 hergestellten Aufträge so zu koordinieren, dass die den an den Verladestellen angeordneten Transportmitteln 11 zugeordneten Druckproduktgebinde einer Ladung zeitlich nacheinander eintreffen. Der Verlad der Druckproduktgebinde an einer Verladestelle 10 in ein Transportmittel 11 soll so geordnet und ohne Stau erfolgen. Mit zunehmender Anzahl von Produktionslinien, Verladestellen und unterschiedlichen Druckprodukten die herzustellen sind, gelangt die Koordination durch den Disponenten 12 an ihre Grenzen.

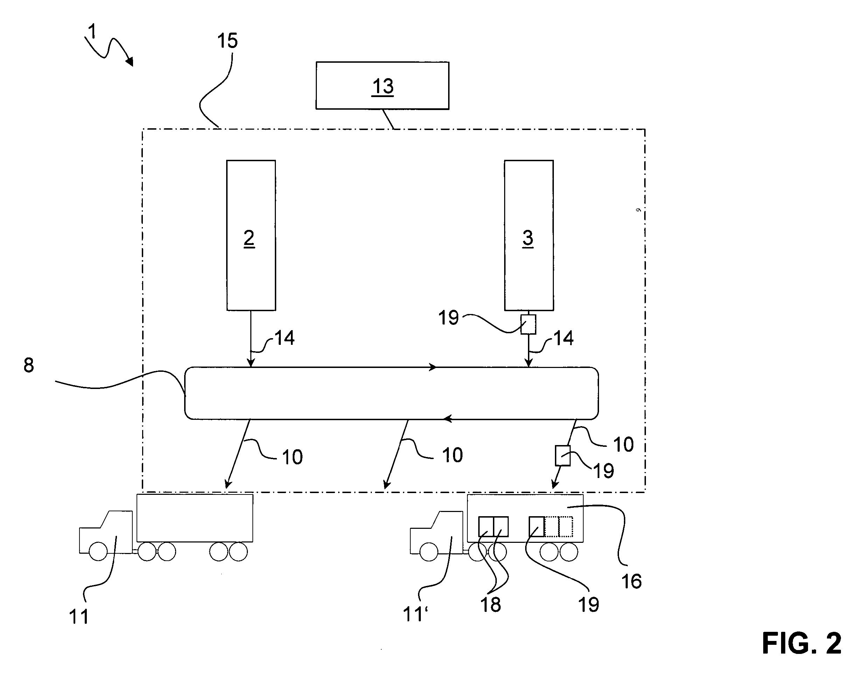

Die in Figur 2 dargestellte erfindungsgemässe Vorrichtung 1 umfasst ebenfalls zwei Produktionslinien 2, 3, die von einer produktionslinienübergreifenden Steuervorrichtung 13 zum Produzieren von einer vorgegebenen Anzahl aus vorzugsweise gleichartiger Druckprodukten bestehenden Druckproduktgebinden 18, 19 entsprechend vorgegebener Ladungsdaten angesteuert wird. Die von den Produktionslinien 2, 3 entsprechend den Ladungsdaten hergestellten Druckproduktgebinde 18, 19 werden mit einer Fördereinrichtung 8 zu Verladestellen 10 gefördert, an denen die Druckproduktgebinde 18, 19 in Transportmittel 11 verladen werden. Die Fördereinrichtung 8 kann sowohl als einfache Bandtransporteinrichtung als auch als vollautomatisches Fördersystem mit mehreren Zuführstellen 14 und Verladestellen 10 für Druckproduktgebinde 18, 19 ausgebildet sein.

Die produktionslinienübergreifende Steuervorrichtung 13 kontrolliert neben den mindestens zwei Produktionslinien 2, 3 auch die Fördereinrichtung 8 und die mindestens zwei Verladestellen 10 eines erweiterten Produktionsbereichs 15. Die Produktionslinien 2, 3 werden unter Berücksichtigung entsprechender Produktionsdaten von der Steuervorrichtung 13 derart angesteuert, dass die zeitliche Abfolge der Herstellung von entsprechend vorgegebenen Verbundaufträgen aus einer vorgegebenen Anzahl vorzugsweise gleichartiger Druckprodukte bestehenden Druckproduktgebinden 18, 19 einer zu einem an einer Verladestation 10 angeordneten Transportmittel 11' gehörenden Ladung 16 in Abhängigkeit von die einzelnen Verbundaufträge der Ladung 16 darstellenden Ladungsdaten automatisch bestimmt wird. Wie in Figur 2 beispielhaft dargestellt, besteht die Ladung 16 des Transportmittels 11' aus mehreren Druckproduktgebinden 18, die beispielsweise auf der Produktionslinie 2 hergestellt und über die Fördereinrichtung 8 der dem Transportmittels 11' zugeordneten Verladestelle 10 transportiert. Von der Produktionslinie 3 hergestellte Druckproduktgebinden 19, sind der Ladung 16 bereits zugeführt oder sind zum Transportmittel 10' unterwegs.

Die Produktionslinien 2, 3 weisen verschiedene Betriebszustände auf, die die zeitliche Abfolge der Herstellung der Druckproduktgebinde18, 19 beeinflussen. Beispielsweise wird der Steuervorrichtung 13 ein Bereftschaftssignal übermittelt, sobald die entsprechende Produktionslinie den Betriebszustand "Betriebsbereit" aufweist.

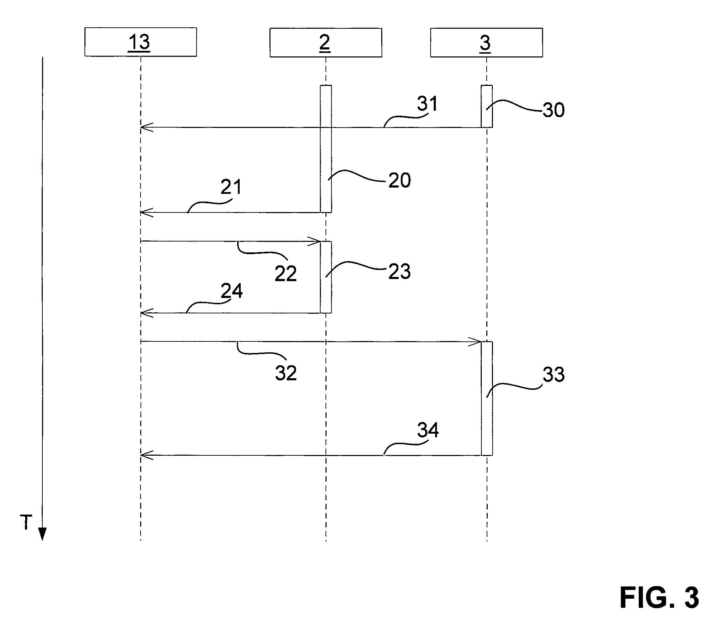

Nachstehend wird anhand der Figur 3 ein erfindungsgemäßes Verfahren erläutert, bei dem die Reihenfolge der gemäß den Ladungsdaten herzustellenden Verbundaufträge fest vorgegeben ist. Bei dem anhand der Figur 3 dargestellten Verfahren sind von der Produktionslinie 2 für eine Ladung 16 herzustellende Druckprodukte gemäß einem ersten Verbundauftrag 23 und danach von der Produktionslinie 3 herzustellende Druckprodukte gemäß einem zweiten Verbundauftrag 33 herzustellen. Der zeitliche Ablauf der Produktion gemäß der Zeitachse T stellt sich wie folgt dar. Zu Beginn der Produktion sind sowohl die Produktionslinie 2 als auch die Produktionslinie 3 mit der Herstellung von Druckprodukten gemäß hier nicht näher zu erläuternden Ladungsdaten beauftragt. Sobald ein entsprechender Verbundauftrag 30 durch die Produktionslinie 3 abgewickelt ist, wird ein Freigabesignal 31 erzeugt und an die Steuervorrichtung 13 angelegt. Im Hinblick auf die vorgegebene Produktionsreihenfolge der Verbundaufträge 23 und 33 wird die Produktionslinie 3 ansprechend auf das Freigabesignal 31 allerdings noch nicht zur Produktion von Druckproduktgebinden gemäß dem folgenden Verbundauftrag 33 angesteuert. An der Produktionslinie 2 wird zu Beginn der Produktion ein Verbundauftrag 20 abgewickelt. Sobald dieser Verbundauftrag 20 abgewickelt ist, wird ein Freigabesignal 21 erzeugt. Im Hinblick auf die vorgegebene Produktionsreihenfolge, wonach zunächst der Verbundauftrag 23 aus den von der Produktionslinie 2 herstellbaren Druckproduktgebinden abzuwickeln ist, bevor der Verbundauftrag 33 mit den von der Produktionslinie 3 herstellbaren Druckproduktgebinden abgewickelt werden kann, wird ansprechend auf das Freigabesignal 21 ein Produktionssignal 22 von der Steuervorrichtung 13 an die Produktionslinie 2 angelegt und mit der Produktion von Figur 2 dargestellten Druckproduktgebinden 18 für den Verbundauftrag 23 begonnen. Sobald der Verbundauftrag 23 abgewickelt ist, wird ein Freigabesignal 24 an die Steuervorrichtung 13 angelegt und erst ansprechend auf dieses Freigabesignal 24 ein Produktionssignal 32 an die Produktionslinie 3 angelegt, um so die Produktion von Druckproduktgebinden 19 für den Verbundauftrag 33 einzuleiten. Nach Fertigstellung der zum Verbundauftrag 33 gehörenden Druckproduktgebinde wird ein Freigabesignal 34 an die Steuervorrichtung 13 angelegt.

Zur Produktion der Verbundaufträge 23, 33 gemäß der durch entsprechende Reihenfolgedaten vorgegebener Produktionsreihenfolgen ist kein Eingriff eines Disponenten erforderlich. Vielmehr ist es ausreichend, wenn die vorhandenen Ladungsdaten und Reihenfolgedaten an die Steuervorrichtung 13 übermittelt, in diese eingegeben und/oder in dieser gespeichert werden.

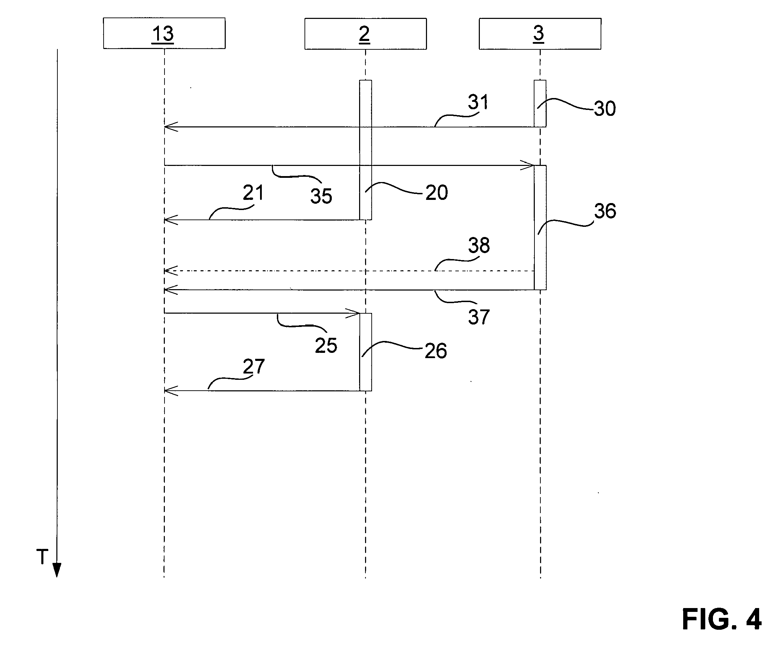

Nachstehend wird anhand der Figur 4 eine Verfahrensführung beschrieben, wobei die Reihenfolge der Produktion von Verbundaufträgen nicht fest vorgegeben ist. Vielmehr ist nur vorgegeben, dass für eine Ladung 16 erste Druckproduktgebinde 18 entsprechend einem Verbundauftrag 26 aus von der Produktionslinie 2 herstellbaren Druckprodukten und zweite Druckproduktgebinde 19 entsprechend einem Verbundauftrag 36 aus von der Produktionslinie 3 herstellbaren Druckprodukten herzustellen sind. Die Ladung 16 mit den beiden Verbundaufträgen 26 und 36 ist in Figur 2 vereinfacht im an einer der beiden Verladestellen 10 stehenden Transportmittel 11' dargestellt. Zu Produktionsbeginn liegen für die beiden Produktionslinien 2 und 3 Bereitschaftssignale vor, d.h. die Produktionslinien 2, 3 können nach übermitteln eines Freigabesignals mit der Herstellung von Druckproduktgebinden beginnen. Die Produktionslinien 2 und 3 sind gemäss der Figur 4 mit der Herstellung von Druckproduktgebinden gemäß den Verbundaufträgen 20 und 30 für andere Ladungen belegt. Nach Abschluss des Verbundauftrags 30 wird ein Freigabesignal 31 von der Produktionslinie 3 an die Steuervorrichtung 13 angelegt. Ansprechend auf das Freigabesignal 31 wird sofort ein Produktionssignal 35 zur Produktion des Verbundauftrags 36 an die Produktionslinie 3 angelegt. Während der Herstellung der Druckproduktgebinden 19 des Verbundauftrags 36 wird der Verbundauftrag 20 an der Produktionslinie 2 fertiggestellt und ein entsprechendes Freigabesignal 21 an die Steuervorrichtung 13 angelegt. Das Produktionssignal 25 zur Einleitung der Produktion von Druckproduktgebinden 18 für den Verbundauftrag 26 wird allerdings erst nach Eingang des Freigabesignals 37, welches den Abschluss des Verbundauftrags 36 durch die Produktionslinie 3 darstellt, von der Steuervorrichtung 13 an die Produktionslinie 2 angelegt, um so die Herstellung von dem Verbundauftrag 26 entsprechenden Druckproduktgebinden 18 durch die Produktionslinie 2 einzuleiten. Nach Abschluss des Verbundauftrags 26 wird wiederum ein Freigabesignal 27 von der Produktionslinie 22 an die Steuervorrichtung 13 angelegt. Es ist auch denkbar, dass bereits vor dem Abschluss des Verbundauftrages 36 ein Freigabesignal 38, beispielsweise wenn 80% des Verbundauftrages 36 produziert sind, an die Steuervorrichtung 13 gesendet wird. In der Folge kann das Produktionssignal 25 früher als in Figur 4 dargestellt an die Produktionslinie 2 angelegt werden, so dass die zur Ladung 16 gehörenden Druckproduktgebinde 18, 19 der beiden Verbundaufträge 26, 36 in deutlich kürzerer Zeit und mit weniger Wartezeiten der Produktionslinien 2, 3 als in dem in Figur 3 dargestellten Ablauf hergestellt werden.

Die Erfindung ist nicht auf die anhand der Zeichnung dargestellten Ausführungsbeispiele beschränkt. Vielmehr können gleichzeitig Verbundaufträge für mehr als zwei Ladungen abgewickelt werden. Auch ist es möglich, dass die Transportmittel 11, 11' während der Produktion der Verbundaufträge 20, 23, 26, 30, 33, 36 von einer Verladestelle 10 zu einer nächsten Verladestelle 10 wechseln.

## Patentansprüche

1. Verfahren zum Herstellen und Verladen von mindestens zu einer einem Transportmittel zugeordneten Ladung gehörenden und jeweils entsprechend vorgegebenen Verbundaufträgen aus einer vorgegebenen Anzahl vorzugsweise gleichartiger Druckprodukte bestehenden Druckproduktgebinden (18, 19), bei dem auf mindestens zwei unabhängig voneinander betreibbaren Produktionslinien (2, 3) Druckproduktgebinde (18, 19) der mindestens einen Ladung (16) hergestellt und zu einer der mindestens einen Ladung (16) zugeordneten Verladestelle (10) gefördert und dort verladen werden, **dadurch gekennzeichnet, dass** die Produktionslinien (2, 3) zur Herstellung der Druckproduktgebinde (18, 19) in Abhängigkeit von die einzelnen Verbundaufträge (23, 33; 26, 36) der mindestens einen Ladung (16) darstellenden Ladungsdaten automatisch angesteuert werden.

2. Verfahren nach Anspruch 1, **dadurch gekennzeichnet, dass** die den Verbundaufträgen (23, 33; 26, 36) entsprechenden Druckproduktgebinde (18, 19) gemäß einer vorgegebenen zeitlichen Abfolge hergestellt werden.

3. Verfahren nach Anspruch 2, **dadurch gekennzeichnet, dass** die zeitliche Abfolge der den Verbundaufträgen (23, 33; 26, 36) entsprechenden Herstellung der Druckproduktgebinde (18, 19) in Abhängigkeit von einem Betriebszustand der Produktionslinien (2, 3) gesteuert wird.

4. Verfahren nach einem der vorhergehenden Ansprüche, **dadurch gekennzeichnet, dass** ein Bereitschaftssignal erzeugt wird, sobald eine Produktionslinie (2, 3) einen zur Herstellung von Druckproduktgebinde (18, 19) geeigneten Betriebszustand erreicht.

5. Verfahren nach einem der vorhergehenden Ansprüche, **dadurch gekennzeichnet, dass** nach Vorliegen des Bereitschaftssignals und bei Erreichen eines vorgegebenen Herstellungszustands eines einem vorhergehenden Verbundauftrag (23, 36) entsprechenden Druckproduktgebindes (18, 19) derselben Ladung (16) ein Freigabesignal (24, 37, 38) erzeugt wird, welches die Erzeugung eines Produktionssignals (25, 32) bewirkt und wobei das Produktionssignal (25, 32) bei einer Produktionslinie (2, 3) die Herstellung eines weiteren Druckproduktgebindes (18, 19) der Ladung (16) auslöst.

6. Verfahren nach Anspruch 5, **dadurch gekennzeichnet, dass** ansprechend auf das Freigabesignal (24, 37, 38) ein Produktionssignal (25, 32) für eine zum Herstellen von Druckproduktgebinden (18, 19) der Ladung (16) betreibbare Produktionslinie (2, 3) erzeugt wird, wenn für diese Produktionslinie (2, 3) ein Bereitschaftssignal vorliegt und ein damit herstellbares Druckproduktgebinde (18, 19) gemäß während der Herstellung der Druckproduktgebinde (18, 19) entsprechend dem Herstellungszustand aktualisierten Ladungsdaten noch für die Ladung (16) benötigt wird.

7. Verfahren nach Anspruch 5 oder 6, **dadurch gekennzeichnet, dass** das Produktionssignal für diejenige unter den verfügbaren Produktionslinien (2, 3) erzeugt wird, für die bei Erzeugung des Freigabesignals (24, 37, 38) das Bereitschaftssignal für den längsten Zeitraum vorliegt.

8. Verfahren nach einem der vorhergehenden Ansprüche, **dadurch gekennzeichnet, dass** den Verbundaufträgen (20; 30; 23, 33; 26, 36) entsprechende Druckproduktgebinde (18, 19) für zumindest zwei Ladungen (16) gleichzeitig hergestellt und an den diesen Ladungen (16) zugeordneten Verladestellen (10) verladen werden.

9. Verfahren nach einem der vorhergehenden Ansprüche, **dadurch gekennzeichnet, dass** eine den Herstellungs- und/oder Verladezustand der den Verbundaufträgen (23, 33; 26, 36) mindestens einer Ladung (16) entsprechenden Druckproduktgebinde (18, 19) darstellende Sichtdarstellung erzeugt wird.

10. Verfahren nach Anspruch 1 oder 2, **dadurch gekennzeichnet, dass** von den Druckprodukten einer Ladung (16) ein Referenzprodukt bestimmt wird und die Druckproduktgebinde (18, 19) des dem Referenzprodukt entsprechenden Verbundauftrags (20; 30; 23, 33; 26, 36) zuerst hergestellt und verladen werden.

11. Vorrichtung zur Durchführung eines Verfahrens nach einem der vorhergehenden Ansprüche, mit mindestens zwei unabhängig voneinander zum Herstellen von aus Druckprodukten bestehenden Druckproduktgebinde (18, 19) betreibbaren Produktionslinien (2, 3) und einer zum Ansteuern der Produktionslinien (2, 3) betreibbaren Steuervorrichtung (13), **dadurch gekennzeichnet, dass** die Steuervorrichtung (13) zur automatischen Bestimmung der zeitlichen Abfolge der Herstellung von entsprechend vorgegebenen Druckproduktgebinden (18, 19) einer zu einem einer Verladestelle (10) zugeordneten Transportmittel (11') gehörenden Ladung (16) in Abhängigkeit von die einzelnen Verbundaufträge (23, 33; 26, 36) der Ladung (16) darstellenden Ladungsdaten betreibbar ist.

12. Vorrichtung nach Anspruch 11, **dadurch gekennzeichnet, dass** mindestens eine Produktionslinie (2, 3) zum Herstellen von aus zumindest zwei voneinander unterscheidbaren Druckprodukten bestehenden Druckproduktgebinden (18, 19) betreibbar ist.

13. Vorrichtung nach Anspruch 11 oder 12, **dadurch gekennzeichnet, dass** die zeitliche Abfolge entsprechend einer insbesondere über eine Schnittstelle der Steuervorrichtung (13) übermittelten und von der Steuervorrichtung (13) vorgegebenen Abfolge bestimmbar ist.

14. Vorrichtung nach einem der Ansprüche 11 bis 13, **dadurch gekennzeichnet, dass** die zeitliche Abfolge in Abhängigkeit von die Verfügbarkeit der Produktionslinien (2, 3) darstellenden Bereitschaftssignaten und von den Herstellungszustand von den Verbundaufträgen (23, 33; 26; 36) der Ladung (16) entsprechenden Druckproduktgebinden (18, 19) darstellenden Freigabesignalen (24, 37, 38) bestimmbar ist.

15. Vorrichtung nach einem der Ansprüche 11 bis 14, **dadurch gekennzeichnet, dass** die Produktionslinien (2, 3) zur gleichzeitigen Herstellung von Druckproduktgebinden (18, 19) für zumindest zwei Ladungen (16) ansteuerbar sind.

## Geänderte Patentansprüche

### Geänderte Patentansprüche gemäss Regel 137(2) EPÜ.

**1.** Verfahren zum Herstellen und Verladen von zu mindestens einer einem Transportmittel zugeordneten Ladung gehörenden und jeweils entsprechend vorgegebenen Verbundaufträgen aus einer vorgegebenen Anzahl vorzugsweise gleichartiger Druckprodukte bestehenden Druckproduktgebinden (18, 19), bei dem auf mindestens zwei unabhängig voneinander betreibbaren Produktionslinien (2, 3) Druckproduktgebinde (18, 19) der mindestens einen Ladung (16) hergestellt und zu einer der mindestens einen Ladung (16) zugeordneten Verladestelle (10) gefördert und dort verladen werden, **dadurch gekennzeichnet, dass** die Produktionslinien (2, 3) zur Herstellung der Druckproduktgebinde (18, 19) in Abhängigkeit von die einzelnen Verbundaufträge (23, 33; 26, 36) der mindestens einen Ladung (16) darstellenden Ladungsdaten automatisch von einer zentralen, die Produktionslinien übergreifenden Steuervorrichtung angesteuert werden.
